# EUROPÄISCHE PATENTANMELDUNG

(11) **EP 2 735 355 A1**
(43) Veröffentlichungstag der Anmeldung: **28.05.2014**
(21) Anmeldenummer: 13194642.8
(22) Anmeldetag: 27.11.2013
(51) Int. Cl.: B01D 53/22

(54) **Permeatorsystem zur Trennung von Gasgemischen**

(30) Priorität: 27.11.2012 AT 12482012
(71) Anmelder: Technische Universität Wien, 1040 Wien (AT); Bioenergy 2020+ GmbH, 8010 Graz (AT)
(72) Erfinder: HARASEK, Michael, 1060 Wien (AT); MAKARUK, Aleksander, 1150 Wien (AT)
(74) Vertreter: Ellmeyer, Wolfgang

(57) **Zusammenfassung**

Die Erfindung betrifft eine Vorrichtung zur Trennung von im Wesentlichen drucklosen Gasgemischen unter Verwendung von Membran-Gaspermeation, umfassend zumindest zwei Trennstufen, die parallel oder in Serie geschaltet sein können, einen Kompressor zur Beaufschlagung des in einer Feedleitung zugeführten Gasgemischs mit Druck, gegebenenfalls einen zweiten Kompressor zur Beaufschlagung eines Permeats aus einer Trennstufe mit Druck, sowie zumindest eine Rückführungsleitung für zumindest ein Retentat und/oder Permeat einer Trennstufe, gekennzeichnet durch
- zwei Paare von Trennstufen (a1, a2; b1, b2), die über je eine Leitung (Rₐ₁; R_{b1}) zur Weiterleitung des Retentats aus der jeweils ersten Trennstufe (a1; b1) eines Paares in die zweite (a2; b2) in Serie geschaltet sind;
- zwei Kompressoren (c1, c2) zur Beaufschlagung des Feeds der jeweils ersten Trennstufe (a1; b1) eines Paares mit Druck;
- eine Leitung (Pₐ₁) zur Weiterleitung des Permeats der ersten Trennstufe (a1) eines ersten Paares (a1, a2) zu dem das zweite Trennstufenpaar (b1, b2) mit Druck beaufschlagenden Kompressor (c2);
- je eine Leitung (Rₐ₂; R_{b2}) zum Abziehen des Retentats der jeweils zweiten Trennstufe (a2; b2) der Paare;
- je eine Leitung (Pₐ₂; P_{b2}) zur Rezyklierung des Permeats der jeweils zweiten Trennstufe (a2; b2) der Paare; und
- eine Leitung (P_{b1}) zum Abziehen des Permeats der ersten Trennstufe (b1) des zweiten Trennstufenpaares (b1, b2).

## Beschreibung

Die vorliegende Erfindung betrifft ein Verfahren und ein Permeatorsystem zur Trennung von Gasgemischen, insbesondere zur Trennung von Gemischen aus Methan und Kohlendioxid, wie sie bei der Biomassevergärung in Biogasanlagen anfallen.

Die Vergärung von Biomasse hat in den letzten Jahren zunehmende Bedeutung erlangt, da auf diese Weise erneuerbares Methan erzeugt werden kann, das als Ersatz für den schwindenden Rohstoff Erdgas eingesetzt wird. In diesen Verfahren fallen typischerweise Gemische an, die - neben Bestandteilen der Luft, Schwefelwasserstoff und gasförmigen organischen Verbindungen - hauptsächlich aus Methan (CH₄) und Kohlendioxid (CO₂) bestehen, woraus das Methan mittels Gastrennverfahren in möglichst reiner Form zu gewinnen ist. Zu diesem Zweck wird als Trennverfahren vorwiegend Membran-Gaspermeation, meist unter Verwendung von Polymerfilm-Membranen, eingesetzt, wobei verschiedene Kombinationen unterschiedlicher Anzahlen an Kompressoren und Permeatoren, d.h. Membranen, zum Einsatz kommen.

In der Literatur sind einige solche Permeatorsysteme ausführlich beschrieben. So beschreiben die Literaturstellen [1] bis [5] allesamt eine einstufige Ausführungsform mit nur einer Trennmembran oder Trennstufe. Diese Ausführungsform erfordert natürlich die geringsten Investitionen, bringt aber sehr hohe Methanverluste mit sich. Folglich wurden auch Mehrpermeator-Systeme zur Trennung von CH₄ und CO₂ ausführlich untersucht, allerdings hauptsächlich in Bezug auf die Erdgasgewinnung. Bhide und Stern [6] stellten fest, dass für einen weiten Bereich von CO₂-Konzentrationen im Erdgas die wirtschaftlichste Konfiguration ein dreistufiges Permeatorsystem mit zwei Kompressoren wäre. Ähnliches haben Spillman [7] und Qi und Henson [8] festgestellt, zur Verringerung der Erdgaskosten empfehlen sie allerdings eine einfachere zweistufige Konfiguration. Datta und Sen [9] haben hingegen festgestellt, dass es schwierig sei, ein optimales System für weite Konzentrationsbereiche von CO₂ im Erdgas zu entwickeln, und Xu und Agrawal [10], [11] haben vorgeschlagen, dass die optimale Konfiguration durch minimale Energieverluste aufgrund von Vermischung charakterisiert sei.

Nur wenige Forscher haben sich jedoch speziell mit der Bewertung von Pemeatorsystemen für die Biogasaufbereitung bzw. die Aufbereitung von Gasgemischen aus Biomassevergasungsprozessen beschäftigt. So haben etwa Schell und Houston [3] neben der einstufigen Ausführungsform auch zweistufige Systeme mit einem oder zwei Kompressoren und wahlweise unter Permeat- oder Retentat-Rezyklierung untersucht. Ihre Schlussfolgerungen sind jedoch nur beschränkt aussagekräftig, zumal nur wenige konkrete Konzeptionsdetails miteinander verglichen werden.

Ganz allgemein besteht ein Hauptunterschied zwischen Erdgas und Biogas freilich darin, dass das bei der Biomassevergärung in Biogasanlagen anfallende, rohe Produktgas in der Regel nahezu drucklos ist, während Erdgas typischerweise unter einem hohen Druck von 30 bis 150 bar steht, was völlig unterschiedliche Anforderungen an die Auslegung der Trennsysteme stellt.

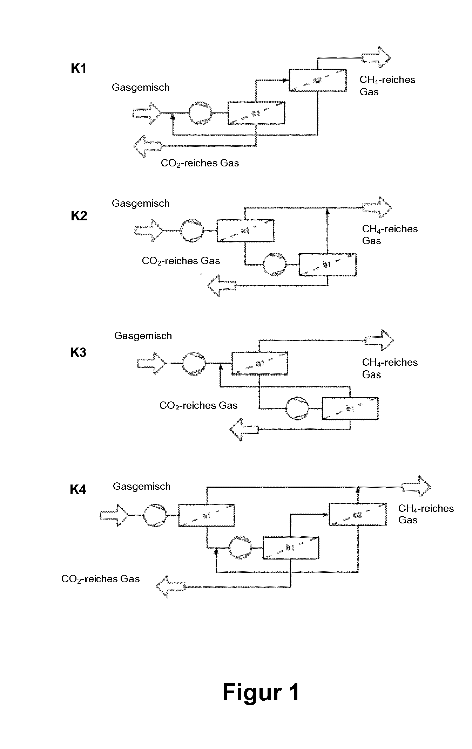

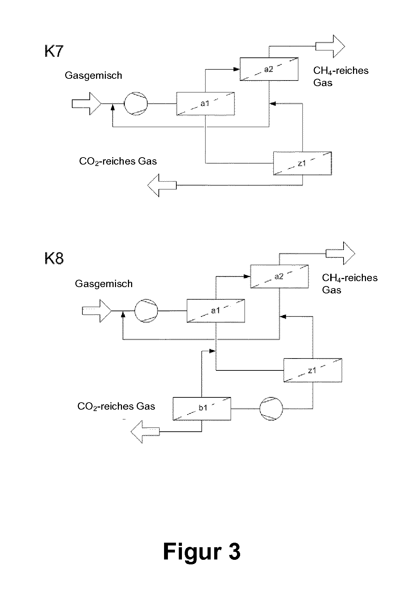

In den Fig. 1 bis 3 sind mehrere Konfigurationen K1 bis K8 mehrstufiger Permeatorsysteme nach dem Stand der Technik am Beispiel der Trennung eines CH₄ und CO₂ enthaltenden Gasgemischs schematisch dargestellt.

K1 aus Fig. 1 wird in Lit. [1], [3] und [13] unter Bezugnahme auf Biogas und in Lit. [6], [9] und [12] in Bezug auf Erdgas beschrieben und umfasst zwei Trennstufen a1 und a2 unter Rezyklierung des Permeats aus der zweiten in den Feed der ersten Stufe. Lit. [13] zeigt, dass bei mittleren Werten für das Flächenverhältnis Aₐ₂/Aₐ₁ der beiden Membranen von a1 und a2 die Methanausbeute nahezu ohne Zunahme des Energiebedarfs erhöht werden kann. K1 erfordert jedoch ganz allgemein enorme Energiemengen, wenn sich die Methanausbeute 100 % annähert, da große Mengen an Permeat aus a2 rezykliert werden müssen.

K2 aus Fig. 1 umfasst zwei Trennstufen a1 und b1 mit je einem Kompressor, wobei in b1 das Permeat aus a1 aufgetrennt und der dabei als Retentat erhaltene CH₄-reiche Strom ebenfalls gewonnen wird. K2 wird in Lit. [6] und [12] in Bezug auf Erdgas beschrieben.

K3 aus Fig. 1 ähnelt K2, allerdings wird hier das Retentat aus b1 in den Feed von a1 rezykliert. Diese Konfiguration wurde sowohl in Bezug auf Erdgas als auch auf Biogas diskutiert; siehe Lit. [1], [6], [7], [9] und [12]. Während Lit. [1] und [7] sie als zu teuer bezeichnen, werden die hohen Kosten in Lit. [9] als unter Umständen vertretbar angesehen.

K4 aus Fig. 1 ist eine dreistufige Kombination aus einer einzelnen Trennstufe a1 mit der Konfiguration K1, hier mit zwei Trennstufen b1 und b2 dargestellt, wobei das Permeat aus a1 den Feed der Trennstufe b1 darstellt. Deren Retentat wird im Permeator b2 weiter aufgetrennt, dessen Retentat zusammen mit dem Retentat aus a1 gewonnen wird, während das Permeat von b2 in den Feed von b1 rezykliert wird. Abgezogen wird CO₂-reiches Gas nur in Form des Permeats aus b1. Diese Konfiguration wurde bisher kaum beschrieben; siehe Lit. [9].

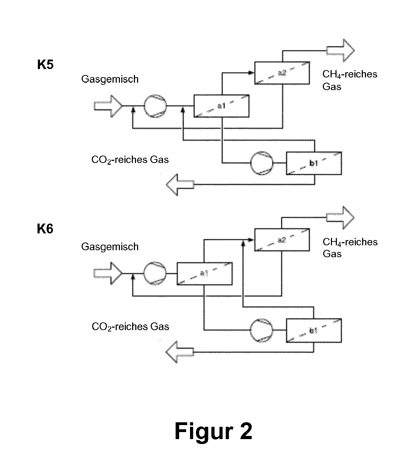

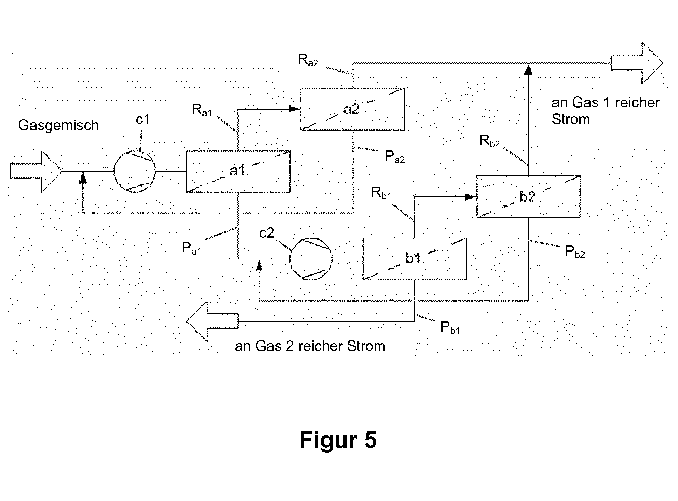

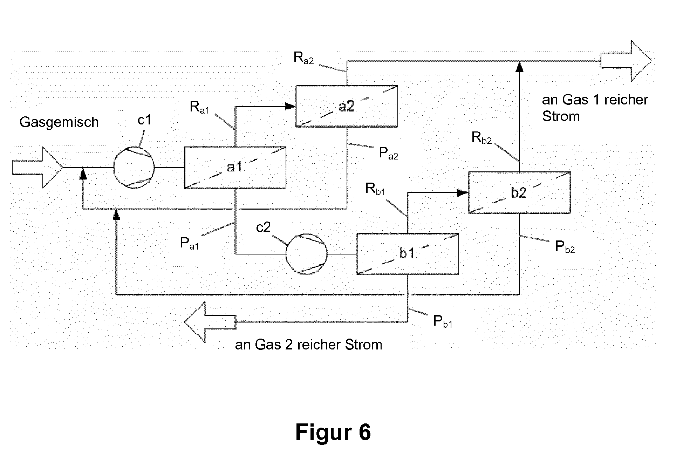

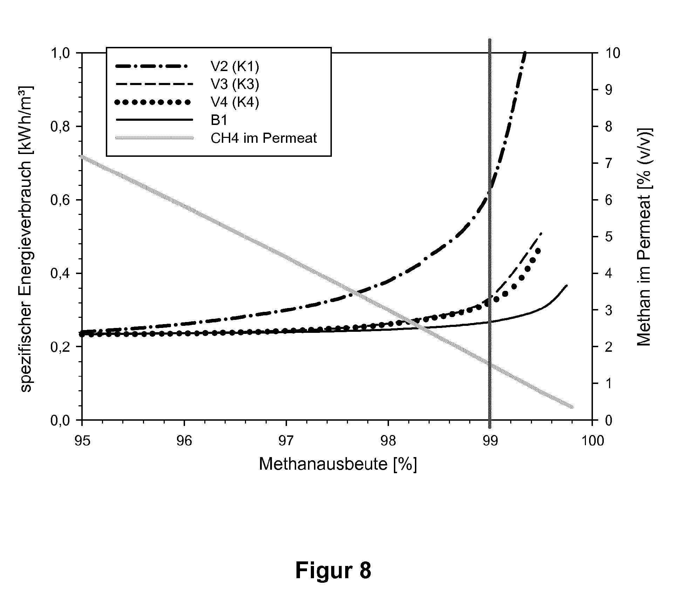

K5 und K6 aus Fig. 2 sind ebenfalls dreistufige Ausführungsformen, die als Kombination aus K1 mit den Trennstufen a1 und a2 und einem weiteren Permeator b1 mit eigenem Kompressor angesehen werden können. In beiden Fällen wird der Feed in den zwei Stufen a1 und a2 zu einem CH₄-reichen Strom gereinigt, wobei das Retentat der dritten Stufe b1 entweder in den Feed zu a1 (K5) oder zu a2 (K6) rezykliert wird. Derartige Konfigurationen wurden ebenfalls nur selten beschrieben; siehe z.B. Lit. [8] und [9] sowie in der Patentliteratur US 6.168.649 B1 (K5 in Fig. 2 dargestellt) und WO 2012/000727 A1 (K5 in Abb. 8 dargestellt). In den Abb. 5 und 6 von WO 2012/000727 A1 werden zwei weitere Ausführungsformen dreistufiger Permeatorsysteme gezeigt, bei denen - zum Unterschied zu K5 - jeweils das Permeat aus Stufe a2 (anstelle jenes aus a1) weiter gereingt wird, wofür mitunter ein dritter Kompressor zum Einsatz kommt.

K7 aus Fig. 3 hierin wird in Abb. 11 von WO 2012/000727 A1 (als System gemäß der dortigen Erfindung) gezeigt und stellt ein weiteres zu K5 ähnliches System mit drei Trennmembranen dar, umfasst jedoch keinen eigenen (zweiten) Kompressor vor dem Permeator z1. Wie auch dem Recherchenbericht zu WO 2012/000727 A1 entnehmen ist, war ein solches System K7 allerdings bereits aus US 6.565.626 B1 bekannt (siehe die dortige Fig. 2). In beiden Fällen wird jedenfalls das Permat aus der ersten Trennstufe a1 ohne weitere Druckbeaufschlagung dem Permeator z1 zugeführt, während das Retentat der Trennstufe a1 wiederum in der Stufe a2 weiter gereinigt wird. Deren Retentat wird schließlich als CH₄-reiches Gas gewonnen, während ihr (nahezu druckloses) Permeat rezykliert, mit dem Feed zu a1 vereinigt und dem ersten Kompressor zugeführt wird.

Eine solche Reinigung des Permeats einer Trennstufe ohne Druckbeaufschlagung durch eine weitere Membran wird auch als "Zwischenexpansionsschritt" bezeichnet, da der ohnehin schon unter einem verhältnismäßig geringen Druck stehende Permeat-Gasstrom durch eine weitere Trennmembran hindurch expandieren gelassen wird. Da in den Zwischenexpansionsstufen im Vergleich zu einem mittels eines Kompressors mit Druck beaufschlagten Permeator deutlich niedrigere Druckverhältnisse zwischen der Feed/Retentat-Seite und der Permeat-Seite erreicht werden, werden beträchtlich größere Membranflächen benötigt um die gewünschte Menge an Gas passieren zu lassen, d.h. zu trennen. Um weiters durch die Einführung einer Zwischenexpansionsstufe in ein Permeatorsystem überhaupt einen sichtbaren Effekt, d.h. eine höhere Gasreinheit im Permeat, erzielen zu können, ist es üblicherweise erforderlich, Membranen mit höherer Selektivitäten einzusetzen. Diese sind allerdings weniger permeabel/durchlässig, was einen noch höheren Bedarf an Membranfläche zu Folge hat. Aus diesem Grund ist es auf dem Fachgebiet üblich geworden, derartige Zwischenexpansionsstufen nicht als eigene Trennstufen anzusehen, was hierin zur besseren Übersicht auch durch die unterschiedliche Bezeichnung der Membran ("z" statt "a") ausgedrückt wird.

Für die Zwecke hierin werden daher nur solche Membranen als Trennstufe bezeichnet und gezählt, die einen direkt vorgeschalteten Kompressor aufweisen oder die ausschließlich mit dem Retentat einer vorhergehenden Trennstufe gespeist werden, das im Verhältnis zum entsprechenden Permeat unter einem deutlich höheren Druck steht. Übliche Verhältnisse zwischen retentat- und permeatseitigem Druck betragen zwischen etwa 5:1 und 50:1.

K8 aus Fig. 3 ist ein weiteres, aus US 6.565.626 B1 bekanntes Trennsystem mit Zwischenexpansionsschritt, wo das Permeat von Trennstufe a1 ohne Druckbeaufschlagung durch einen zusätzlichen Kompressor eine weitere Trennmembran z1 passieren gelassen wird. Deren Retentat wird wiederum rezykliert und mit dem Feed zu dem der ersten Trennstufe a1 vorgeschalteten Kompressor vermischt, während ihr Permeat in einem Permeator b1 weiter gereinigt wird, der von einem zweiten Kompressor gespeist wird. Dessen Permeat fällt als CO₂-reiches Gas an, während das Retentat rezykliert wird und gemeinsam mit dem Permeat von a1 den Feed für Membran z1 bildet.

Dieser Feed setzt sich daher aus einem relativ drucklosen Permeatstrom und einem Retentatstrom mit relativ höherem Druck zusammen. Die Membran z1 ist somit gemäß der gängigen und hierin zuvor erläuterten Definition nicht als "echte" eigene Trennstufe, sondern lediglich als Zwischenexpansionsstufe anzusehen. Es zeigt sich, dass für Systeme mit drei oder mehr Trennmembranen und ein, zwei oder mehr Kompressoren verschiedenste Möglichkeiten zur Trennung von Gasgemischen existieren, speziell, wenn zusätzlich noch Zwischenexpansionsstufen eingesetzt werden.

K9 in Fig. 13 stellt ein weiteres System nach dem Stand der Technik dar, das aus AT 507.891 A4 der Fa. Axiom bekannt ist (siehe die dortige Fig. 1) und bei dessen Entwicklung einer der vorliegenden Erfinder maßgeblich beteiligt war. Dieses Permeatorsystem K9 umfasst zwar vier Trennstufen (Bezugszeichen 5, 4, 1, 2), die als Paare 5+4 und 1+2 verschaltet sind, sowie zwei Kompressoren, allerdings handelt es sich dabei gewissermaßen um zwei hintereinander geschaltete Systeme K1, wobei das Permeat 4c der zweiten Trennstufe 4 eines aus den Trennstufen 5 und 4 bestehenden "ersten K1-Systems" zu einem aus den Trennstufen 1 und 2 bestehenden "zweiten K1-System" weitergeleitet wird. Die Permeate der jeweils ersten Trennstufen 5 bzw. 1 der beiden Paare 5/4 und 1/2 werden keiner weiteren Trennung unterzogen, sondern als "Offgas" ausgeleitet. Als Vorteil eines solchen Systems K9 gegenüber einem einfachen System K1 (siehe die dortige Fig. 4 und die Ausführungen auf Seite 7) wird in AT 507.891 A4 die Möglichkeit der kleineren Dimensionierung der Anlage genannt. Eine gegenüber K1 erhöhte Reinheit der Gasströme wird hingegen weder angestrebt noch überhaupt erwähnt.

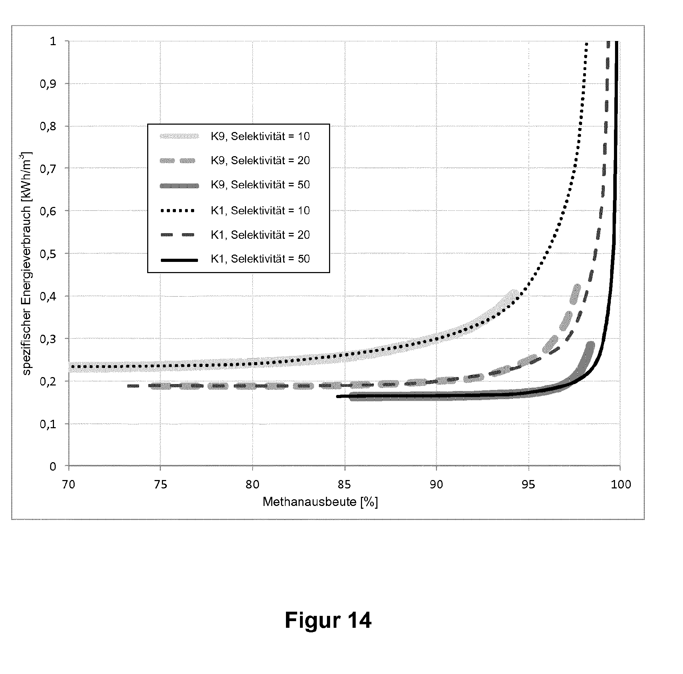

Die bekannten Permeatorsysteme K1 bis K9 haben freilich allesamt den Nachteil, dass der Energieverbrauch nahezu exponentiell ansteigt, wenn Methanausbeuten über 95 % oder gar nahe 100 % erzielt werden sollen. Für K1 und K9 ist dies in Fig. 14 grafisch dargestellt. Für K5, K6 und K9 gibt es in der Literatur außerdem keinerlei Hinweise darauf, dass mit diesen Systemen Wertstoff- (d.h. CH₄-) Konzentrationen von < 1 % (v/v) im zu verwerfenden Permeat überhaupt erzielbar sind, was aber erforderlich wäre, um den Gasstrom als Abgas ("Offgas") an die Umgebung abgeben zu können, ohne ihn aufwändig reinigen zu müssen.

Für System K7, das nur einen einzigen Kompressor für zwei echte Trennstufen und eine Zwischenexpansionsstufe umfasst, beschreibt WO 2012/000727 A1 zwar in den dortigen Rechenbeispielen Trennungen von CH₄ und CO₂, bei denen Methangehalte im CO₂-reichen Gas von 0,5 % (v/v) oder weniger erreichbar sein sollen. Allerdings werden hierfür Membranen mit einer Selektivität von 45 herangezogen, und in der Beschreibung wird erwähnt, dass die Selektivität am besten sogar zwischen 45 und 80 liegen sollte. Konkrete Angaben zum Energieverbrauch fehlen gänzlich. Als Vergleichsbeispiel dient dasselbe Permeatorsystem K7, allerdings unter Verwendung von Membranen mit einer Selektivität von nur 20, was nachvollziehbarerweise ein deutlich schlechteres Resultat liefert.

In Bezug auf System K8 werden in den zahlreichen Ausführungsbeispielen von US 6.565.626 B1 im Wesentlichen Methan/Kohlendioxid-Trennungen (gegebenenfalls in Gegenwart weiterer Gase, vor allem Stickstoff) berechnet, wobei jedoch in allen Fällen von einer angestrebten Reinheit des Wertstoffs CH₄ von nur rund 96 % ausgegangen wird und mit Membranen einer Selektivität CO₂/CH₄ von 20 gerechnet wird. Im CO₂-reichen Gas finden sich dabei zwischen 12,6 % (Beispiel 41; System K7: zweistufig + Zwischenexpansion) bzw. 20,0 % (Beispiel 13; System K8: dreistufig + Zwischenexpansion) und 62,7 % (Beispiel 1; System K1: zweistufig) Methan wieder. Die Methanausbeuten sind mit bestenfalls 92% (in Beispiel 13) relativ gering, und die Verbesserung von Beispiel 13 gegenüber Beispiel 10, in dem ebenfalls System K8 zum Einsatz kommt, wobei jedoch sogar 35 % Methan im CO₂-reichen Gas enthalten sind, wird, wie in Beispiel 13 festgestellt wird, durch eine Vergrößerung der Membranflächen um etwa 23 % und eine Erhöhung der Kompressorleistung um mehr als 50 % teuer erkauft. Das System K8 wäre somit für derzeitige Anforderungen an Gasreinheit und Wirtschaftlichkeit ungeeignet.

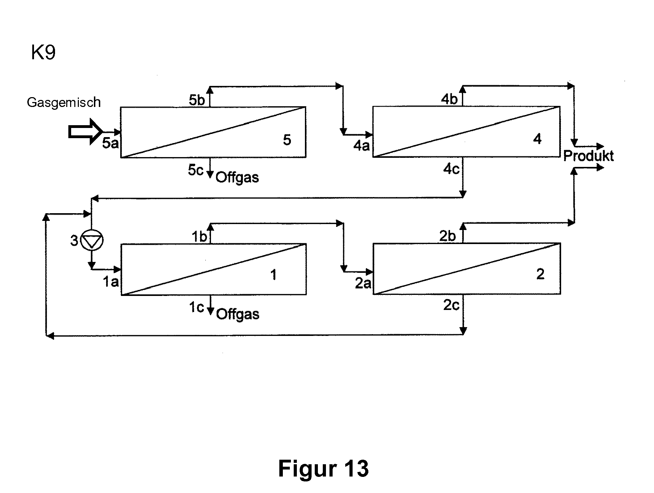

Das vierstufige System K9 aus Fig. 13 schließlich benötigt zum Erreichen derselben Methanausbeuten bei Zielvorgaben von über 90 % sogar noch mehr Energie als das zweistufige System K1, wie ein Vergleich der Erfinder ergeben hat, der in Fig. 14 grafisch dargestellt ist. Dies ist anzunehmenderweise auf die Gegenwart des zweiten Kompressors sowie auf den Umstand zurückzuführen, dass die Permeate der jeweils ersten Trennstufen der beiden Paare nach nur einem Trennvorgang ohne weitere Reinigung abgelassen werden, so dass der überwiegende Hauptteil des anfänglich zugeführten Feedstroms wiederholt das zweite Trennstufenpaar durchlaufen muss.

Die obigen Nachteile der bekannten Permeatorsysteme zu überwinden, insbesondere den Energieverbrauch bei gleichzeitig hoher Trennleistung zu senken, war daher das Ziel der vorliegenden Erfindung.

### OFFENBARUNG DER ERFINDUNG

Dieses Ziel erreicht die Erfindung durch Bereitstellung eines Permeatorsystems in Form einer Vorrichtung zur Trennung von im Wesentlichen drucklosen Gasgemischen unter Verwendung von Membran-Gaspermeation, umfassend zumindest zwei Trennstufen, die parallel oder in Serie geschaltet sein können, einen Kompressor zur Beaufschlagung des in einer Feedleitung zugeführten Gasgemischs mit Druck, gegebenenfalls einen zweiten Kompressor zur Beaufschlagung eines Permeats aus einer Trennstufe mit Druck, sowie zumindest eine Rückführungsleitung für zumindest ein Retentat und/oder Permeat einer Trennstufe, wobei die erfindungsgemäße Vorrichtung gekennzeichnet ist durch:
- zwei Paare von Trennstufen, die über je eine Leitung zur Weiterleitung des Retentats aus der jeweils ersten Trennstufe eines Paares in die zweite in Serie geschaltet sind;
- zwei Kompressoren zur Beaufschlagung des Feeds der jeweils ersten Trennstufe eines Paares mit Druck;
- eine Leitung zur Weiterleitung des Permeats der ersten Trennstufe eines ersten Paares zu dem das zweite Trennstufenpaar mit Druck beaufschlagenden Kompressor;
- je eine Leitung zum Abziehen des Retentats der jeweils zweiten Trennstufe der Paare;
- je eine Leitung zur Rezyklierung des Permeats der jeweils zweiten Trennstufe der Paare; und
- eine Leitung zum Abziehen des Permeats der ersten Trennstufe des zweiten Trennstufenpaares.

Mittels einer solchen Anordnung zweier Trennstufenpaare, deren Retentate jeweils an einer Komponente des Gasgemischs - hierin allgemein als Gas 1 bezeichnet-angereichert sind, ist es bei geeigneter Wahl der Membranen und Membranflächen nicht nur möglich, diese Komponente des Gemischs, sondern auch eine zweite Komponente - hierin als Gas 2 bezeichnet - in im Wesentlichen reiner Form zu erhalten, die im Permeat der ersten Trennstufe des zweiten Paares enthalten ist. Ist das zu trennende Gasgemisch beispielsweise ein grob vorgereinigtes Biomasse-Rohgas, mit Methan als Gas 1 und Kohlendioxid als Gas 2, wovon natürlich vor allem Methan als Wertstoff gereinigt werden soll, kann der so genannte "Methanschlupf', also der Methangehalt in dem als "Offgas" bezeichneten, kohlendioxidreichen Gas 2, stark reduziert werden, d.h. auf Werte unter 1 % (v/v) und sogar unter 0,5 % (v/v). Dies ermöglicht unter anderem ein einfaches Ablassen des Offgases in die Umgebung, und das ohne kostspielige Nachreinigung.

Dies wird dadurch ermöglicht, dass das Retentat der ersten Trennstufe des ersten Paares einer weiteren und ihr Permeat sogar zwei weiteren Trennstufen zugeführt werden, wobei zwei Permeate dieser Trennstufen rezykliert werden (und das dritte als Gas 2 abgelassen bzw. gewonnen wird). Auf diese Weise findet sich ein ganz besonders niedriger Anteil an Gas 1, nämlich durchwegs unter 1 % (v/v) und mitunter sogar unter 0,5 % (v/v), in Gas 2 wieder, während Gas 1 weiterhin in im Wesentlichen reiner Form erhalten werden kann. Im Vergleich zu Systemen nach dem Stand der Technik wird dabei der Energieverbrauch der Kompressoren signifikant gesenkt, wie die späteren Beispiele belegen.

Generell wird nämlich dem Permeatorsystem durch die gegenüber den meisten Systemen nach dem Stand der Technik zusätzlich vorgesehene, echte vierte Trennstufe der Permeate ein weiterer Freiheitsgrad hinzugefügt, durch den das Trennverfahren einfacher bezüglich des Energieverbrauchs optimiert werden kann. Gegenüber dem ebenfalls vierstufigen System K9 unterscheidet sich die vorliegende Erfindung dadurch ganz entscheidend, dass die Pemeate der jeweils ersten Trennstufen der beiden Paare zumindest einem weiteren Trennschritt unterzogen werden, so dass die Mengen an zu rezyklierendem Gas erheblich geringer gewählt werden können, was den Energieverbrauch enorm senkt. Wesentlich ist natürlich auch gemäß vorliegender Erfindung die geeignete Auswahl der Membranen und dabei vor allem der Membranflächen und der Flächenverhältnisse sowie der Selektivität der Membranen für die zu trennenden Gase. Dies wird in den späteren Beispielen näher ausgeführt.

Unter "im Wesentlichen drucklos" ist hierin ein Ausgangsdruck des zu trennenden Gasgemischs von typischerweise Atmosphärendruck, d.h. 0 bar (g), zu verstehen, wie er beispielsweise bei der Biomassevergärung in Biogasanlagen herrscht. In besonderen Fällen, z.B. bei Biomassevergasungsprozessen, kann das Gasgemisch mit Drücken von bis zu maximal 3-5 bar (g) anfallen. Speziell im Vergleich zu Erdgas, das typischerweise unter einem Druck von etwa 30 bis 150 bar steht, sind auch letztere (Bio-)Gasgemische, vom einem verfahrenstechnischen Gesichtspunkt aus gesehen, als (nahezu) drucklos zu bezeichnen.

In bevorzugten Ausführungsformen der Vorrichtung führt die Leitung zur Rezyklierung des Permeats der zweiten Trennstufe des ersten Paares zu dem das erste Paar mit Druck beaufschlagenden Kompressor zurück, so dass die in diesem Permeat enthaltenen Gase den vollständigen Trennprozess erneut durchlaufen können.

Dabei mündet die Leitung zur Rezyklierung des Permeats der zweiten Trennstufe des ersten Paares vorzugsweise vor dem das erste Paar mit Druck beaufschlagenden Kompressor in die Feedleitung für das zu trennende, drucklose Gasgemisch ein. Das heißt, dass der Feed und das rezyklierte Permeat, die beide im Wesentlichen drucklos sind, gemeinsam mit Druck beaufschlagt und in die erste Trennstufe des ersten Paares eingeleitet werden, wofür nur ein Kompressor erforderlich ist. Alternativ dazu kann das rezyklierte Permeat aber auch mittels eines zusätzlichen Kompressors mit Druck beaufschlagt und mit dem ebenfalls bereits mit Druck beaufschlagten Feed vermischt werden, was vorteilhaft ist, wenn der Feed des zu trennenden Gasgemischs bereits unter einem - wenn auch geringen - Druck stehend anfällt, z.B. bei Biomassevergasungsprozessen, und dieser Druck nicht durch das Vermischen mit dem praktisch drucklosen Rezyklat gesenkt werden soll. In diesen Fällen können Feed und Rezyklat gesondert voneinander mit Druck beaufschlagt und anschließend vermischt werden. Dabei sind die Drücke und Mengenströme natürlich so aufeinander abzustimmen, dass das Gemisch den für die erste Trennstufe erforderlichen Druck aufweist.

Die Leitung zur Rezyklierung des Permeats der zweiten Trennstufe des zweiten Paares führt gemäß vorliegender Erfindung entweder zu dem das zweite Paar mit Druck beaufschlagenden Kompressor, d.h. zur ersten Trennstufe des zweiten Paares, oder zu dem das erste Paar mit Druck beaufschlagenden Kompressor, d.h. zur ersten Trennstufe des ersten Paares zurück, oder kann auch in einem bestimmten Verhältnis geteilt werden und zu beiden Trennstufen zurückgeführt werden. Dies ermöglicht eine flexible Wahl der Membranen und der Flächenverhältnisse, da dieses Permeat der zweiten Trennstufe des zweiten Paares -je nach Verhältnis zwischen Gas 1 und Gas 2 darin - das gesamte Permeatorsystem oder nur das zweite Trennstufenpaar, oder auch anteilsmäßig beide, erneut passieren gelassen wird.

Wiederum werden die Rückführungsleitungen der rezyklierten Permeate vorzugsweise vor den jeweiligen Kompressoren mit den Feedleitungen zu den ersten Trennstufen der Paare kombiniert. In speziellen Fällen können jedoch auch zusätzliche Kompressoren für die rezyklierten Permeate vorgesehen sein, um diese mit dem notwendigen Druck zu beaufschlagen, bevor sie mit dem ebenfalls bereits unter Druck stehenden Feed der ersten Trennstufe des jeweiligen Paares vermischt werden.

In einem zweiten Aspekt betrifft die Erfindung ein entsprechendes Verfahren zur Trennung von im Wesentlichen drucklosen Gasgemischen mittels Membran-Gaspermeation unter Verwendung einer Vorrichtung gemäß dem ersten Aspekt der Erfindung wie oben beschrieben, wobei das Verfahren - in Analogie zu den Ausführungsformen der erfindungsgemäßen Vorrichtung - Folgendes umfasst:
- das Leiten des Gasgemischs durch zwei Paare von Trennstufen, wovon jeweils die erste Trennstufe durch je einen Kompressor mit Druck beaufschlagt wird und die Retentate dieser ersten Trennstufen in die jeweils zweite Trennstufe weitergeleitet werden; wobei das Permeat der ersten Trennstufe des ersten Paares in den Feed der ersten Trennstufe des zweiten Paares eingeleitet wird oder diesen darstellt;
- das Rezyklieren der Permeate der jeweiligen zweiten Trennstufen der Paare;
- das Abziehen der an einer Komponente des Gasgemischs angereicherten Retentate der jeweiligen zweiten Trennstufen; und
- das Abziehen des an einer anderen Komponente des Gasgemischs angereicherten Permeats der ersten Trennstufe des zweiten Paares. Die Vorteile sind dieselben wie oben für die erfindungsgemäße Vorrichtung beschrieben, insbesondere eine besonders hohe Reinheit der aufgetrennten Ströme der Gase 1 und 2 bei deutlich niedrigerem Energieverbrauch.

Das Permeat der zweiten Trennstufe des ersten Paares wird vorzugsweise zur ersten Trennstufe des ersten Paares rezykliert, wobei es besonders bevorzugt mit dem zu trennenden, im Wesentlichen drucklosen Gasgemisch vermischt wird, bevor das so erhaltene Gemisch mit Druck beaufschlagt wird, was nur einen Kompressor erfordert. Das Permeat der zweiten Trennstufe des zweiten Paares kann wiederum entweder zur ersten Trennstufe des zweiten Paares oder zur ersten Trennstufe des ersten Paares oder auch zu beiden rezykliert werden, um so das Verfahren je nach Beschaffenheit des zu trennenden Gases und apparativen Bedingungen des Systems zu optimieren.

Die Membranen der einzelnen Trennstufen sind dabei vorzugsweise aus Polymerfilm- und Keramikmembranen ausgewählt, da diese auf dem Gebiet der Gastrennung die besten Ergebnisse liefern. So sind etwa dichte Polymerschichten typischerweise für CO₂ durchlässiger als für CH₄ und werden daher häufig zur Trennung dieser beiden Gase eingesetzt. Zur Trennung korrosiver Gasgemische werden hingegen oft diesbezüglich widerstandsfähigere Membranen aus Keramik eingesetzt.

Die Anwendungsgebiete der Vorrichtung und des Verfahrens der Erfindung sind freilich nicht speziell eingeschränkt. Als bevorzugte Beispiele seien Biomassevergasung, gegebenenfalls unter Methanisierung, anaerobe Vergärung sowie Kombinationen aus Wasserelektrolyse und Methanisierung genannt.

Ein wesentliches Kriterium ist die Selektivität der Membranen für die damit zu trennenden Gase. Diese wird durch das Verhältnis der Durchtrittsgeschwindigkeiten zweier verschiedener Gase ausgedrückt und beträgt typischerweise zwischen 10 und 50, zumeist etwa 20, um brauchbare Ergebnisse in Bezug auf Trenneffizienz und Energiebedarf zu liefern, ohne den Energieverbrauch und die Kosten allzu stark ansteigen zu lassen. In den späteren Beispielen werden Membranen mit unterschiedlichen Selektivitäten berücksichtigt.

### KURZBESCHREIBUNG DER ZEICHNUNGEN

Nachstehend wird die Erfindung unter Bezugnahme auf die beiliegenden Zeichnungen näher beschrieben, in denen Folgendes dargestellt ist.
Die Fig. 1 bis 3 zeigen, wie zuvor erwähnt, Permeatorsysteme nach dem Stand der Technik mit zwei oder drei Trennstufen, wobei die Permeatorsysteme aus Fig. 3 zusätzlich eine Zwischenexpansionsstufe umfassen.
Fig. 4 zeigt einen Vergleich mehrerer Membranen unterschiedlicher Selektivitäten in einem einfachen Permeatorsystem nach dem Stand der Technik.
Die Fig. 5 und 6 zeigen zwei Ausführungsformen des erfindungsgemäßen Permeatorsystems mit vier Trennstufen.
Die Fig. 7 bis 12 zeigen Vergleiche von erfindungsgemäßen Permeatorsystemen der Beispiele 1 bis 3 mit Systemen nach dem Stand der Technik.
Fig. 13 zeigt ein weiteres Permeatorsystem nach dem Stand der Technik.
Fig. 14 zeigt einen Vergleich der Systeme K1 und K9 nach dem Stand der Technik.

Es sei angemerkt, dass in den Fig. 5 und 6, die Ausführungsformen der erfindungsgemäßen Vorrichtung zeigen und damit gleichzeitig das erfindungsgemäße Verfahren illustrieren, mit "P" und "R" sowohl die Leitungen, in denen die jeweiligen Permeate bzw. Retentate geführt werden, als auch die Gasströme selbst bezeichnet werden.

### DETALLIERTE BESCHREIBUNG DER ERFINDUNG

In den Fig. 1 bis 3 sind, wie eingangs beschrieben, verschiedene Permeatorsysteme nach dem Stand der Technik mit 2 oder 3 Trennstufen und gegebenenfalls einer Zwischenexpansionsstufe dargestellt, wobei zur Veranschaulichung, wie auf dem Gebiet üblich, eine Trennung von CH₄ und CO₂ angenommen wurde, wie sie etwa bei einer Biogasaufbereitung vorzunehmen ist, um Methan als möglichst reines Produktgas zu gewinnen. Zum Zwecke des Vergleichs mit der vorliegenden Erfindung sind für diese bekannten Konfigurationen vor dem Eintritt in die erste Trennstufe Kompressoren vorgesehen, um einen drucklosen Feed verarbeiten zu können. Allerdings sind, wie ebenfalls eingangs erwähnt wurde, gar nicht alle diese Permeatorsysteme unter Bezug auf Biogas oder andere drucklose Gasfeeds beschrieben worden.

Der augenfälligste Unterschied der erfindungsgemäßen Permeatorsysteme, wie in den Fig. 5 und 6 dargestellt, zu den meisten bekannten Systemen besteht in der zusätzlichen, vierten Trennstufe, die gemäß obiger Definition und im Gegensatz zum bekannten System K8 eine "echte" vierte Trennstufe bildet, da sie ausschließlich mit unter einem relativ hohen Druck stehendem Retentat bzw. von einem direkt vorgeschalteten Kompressor gespeist wird. Formal könnte die erfindungsgemäße Ausführungsform aus Fig. 5 - wie auch die ebenfalls bereits bekannte Konfiguration K9 aus Fig. 13 - als Kombination zweier bekannter Systeme K1 angesehen werden, bei der das Permeat der ersten Trennstufe eines ersten Systems K1 in einem weiteren solchen System aufgetrennt wird. Jene aus Fig. 6 lässt sich hingegen nicht aus den in den Fig. 1 bis 3 dargestellten zwei- und dreistufigen Permeatorsystemen kombinieren, da kein einziges dieser Systeme eine Rezyklierung des Permeats einer dritten bzw. vierten Trennstufe zurück zur allerersten vorsieht. Auch lassen sich beide Ausführungsformen der Erfindung nicht als bloße Kombination bekannter Systeme K1 betreiben, da mit der echten vierten Trennstufe gegenüber dreistufigen Lösungen ein zusätzlicher Freiheitsgrad in das System eingeführt wird. Dies ermöglicht zwar einerseits eine bessere Optimierung und den Erhalt reinerer Produktgasströme bei gleichzeitig geringerem Energieverbrauch, erfordert aber andererseits auch eine exaktere Feinabstimmung der Druck- und Membranflächen-Verhältnisse, um den zusätzlichen apparativen und verfahrenstechnischen Aufwand zu rechtfertigen.

Der Hauptunterschied gegenüber dem System K9 aus Fig. 13 besteht darin, dass nicht das Permeat der zweiten Trennstufe des ersten Paares in einem zweiten Trennstufenpaar weiter aufgetrennt wird, sondern dieses Permeat vielmehr innerhalb des ersten Paares rezykliert wird und stattdessen das Permeat der allerersten Trennstufe dem zweiten Paar zugeführt wird. Dadurch durchläuft gemäß vorliegender Erfindung jeder Gasstrom zumindest zwei Trennstufen, während im System K9 das Permeat der allerersten Trennstufe gleich aus dem System ausgeschleust wird. Dies bedingt, dass dieses nicht weiter gereinigte allererste Permeat nur einen äußerst geringen Anteil des Feeds ausmachen darf, während der überwiegende Anteil des Feeds dem zweiten Trennstufenpaar zugeführt und innerhalb dessen oftmalig rezykliert werden muss, um überhaupt Reinheiten beider aus dem System abgezogener Gasströme von über 90 % erzielen zu können. Dies verschlingt im Gegensatz zur vorliegenden Erfindung enorme Mengen an Energie, was durch einen Vergleich zwischen K1 und K9 in Fig. 14 belegt wird.

Wie die nun folgenden Beispiele zeigen, ist die Leistungsfähigkeit beider in den Zeichnungen dargestellten Ausführungsformen des erfindungsgemäßen Permeatorsystems um ein Vielfaches besser als jene der bekannten Systeme.

### Vergleichsbeispiel 1

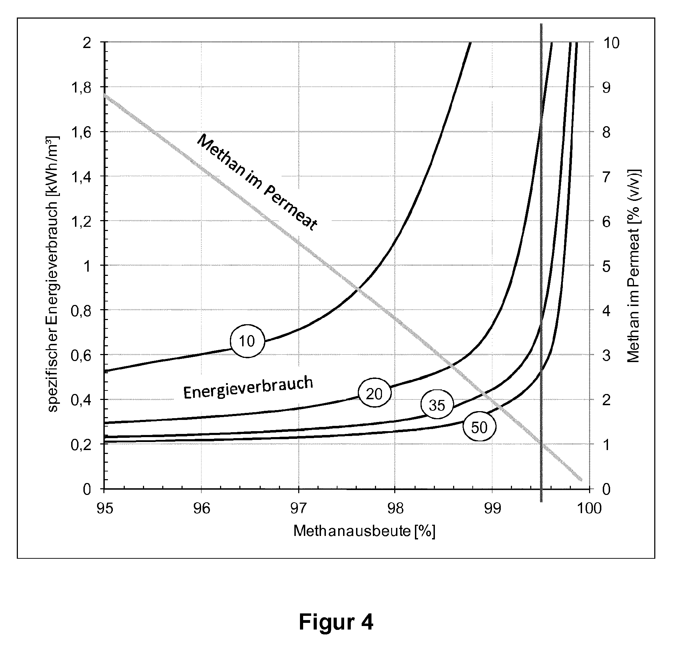

In Fig. 4 sind mittels validierter Computermodellierung erhaltene Ergebnisse für das bekannte Permeatorsystem K1 aus Fig. 1 unter Verwendung von vier verschiedenen Membran-Paaren mit unterschiedlichen Selektivitäten für die Trennung von CH₄ und CO₂ grafisch dargestellt (vgl. Lit. [13] der vorliegenden Erfinder). Auf der x-Achse ist die Methanausbeute in Prozent des im zu trennenden Gasgemisch enthaltenen Methans aufgetragen. Auf der y-Achse ist auf der linken Seite die spezifische Kompressionsenergie in kWh/m³ Gas und rechts der Gehalt an "Methan im Permeat", d.h. im CO₂-reichen Offgas, in % (v/v) angegeben, der sich entlang der eingezeichneten Diagonalen ändert.

Das Ziel jeder solcher Trennung ist eine hohe Methanausbeute bei niedrigem Energieverbrauch und gleichzeitig geringem Methangehalt im Offgas, vorzugsweise einem Methangehalt von maximal 1 % (v/v), um das Offgas möglichst ohne Nachreinigung in die Umgebung ablassen zu können. Dieses erwünschte Ergebnis wird durch die senkrechte "Ziellinie" dargestellt, die die Methangehalt-Diagonale bei 1 % (v/v) schneidet, was im vorliegenden Fall einer Methanausbeute von 99,5 % entspräche. Die Kurven in Fig. 4 zeigen die Werte für das Permeatorsystem K1 mit unterschiedlichen Selektivitäten der Membran-Paare von 10, 20, 35 und 50. Diese Werte bedeuten, dass Kohlendioxid 10-, 20-, 35- bzw. 50-mal schneller die Membran passiert als Methan. Für die Modellberechnung wurden jeweils zwei identische Membranen und für den vom einzigen Kompressor erzeugten Druck 10 bar angenommen. Die Größen- und Flächenverhältnisse der Membranen wurden bei der Berechnung variiert, woraus sich unterschiedliche Verhältnisse der Retentat- und Permeatströme ergaben. Dies bedeutet, dass in Abhängigkeit von den Membrandaten jeweils unterschiedliche Mengen an Gas rezykliert werden, was sich im Energieverbrauch niederschlägt. Zur Erzielung höherer Ausbeuten und Reinheiten ist es selbstverständlich notwendig, größere Gasmengen zu rezyklieren und erneut zu reinigen, wodurch der Energieverbrauch steigt.

Es zeigt sich, dass in diesem Vergleichsbeispiel mit dem Permeatorsystem K1 aus Fig. 1 die gewünschten Werte - bei einigermaßen realistischem Energieverbrauch-erst ab einer Membranselektivität von 20 erreichbar sind, wofür aber eine Energie von ca. 1,7 kWh/m³ Gas erforderlich ist, da sehr große Mengen an Permeat rezykliert werden müssen. Selbst unter Verwendung von Membranen mit Selektivitäten von 35 und 50 sind immer noch 0,7 bzw. 0,5 kWh/m³ erforderlich. Diese Werte entsprechen rund dem 6fachen, 3fachen bzw. 2,5fachen jener Energieverbrauchswerte, die für eine jeweils 95%ige Gewinnung des Methans notwendig sind, was durch die Anfangspunkte der Kurven auf der y-Achse gegeben ist. Unter diesen Anfangsbedingungen einer Membranselektivität von 20 wären allerdings noch knapp 9 % (v/v) Methan im Offgas enthalten, so dass in der Praxis sehr viel Energie für die Nachreinigung desselben erforderlich wäre.

Man erkennt also, dass in diesem System K1 zumindest Membranen mit Selektivität 35, besser mit Selektivität 50, eingesetzt werden müssen, um bei einigermaßen akzeptablem Gesamtenergieverbauch, d.h. unter Rezyklierung relativ geringer Gasvolumina, eine Methanausbeute von 99 % oder mehr erzielen zu können.

### Beispiel 1 & Vergleichsbeispiele 2 bis 4

Eine erste Modellierung eines erfindungsgemäßen Permeatorsystems unter Verwendung zweier Paare von Trennstufen wie in Fig. 5 dargestellt (Beispiel 1; kurz B1) sowie dreier Vergleiche mit den herkömmlichen Permeatorsystemen K1 (Vergleichsbeispiel 2; V2), K3 (V3) und K4 (V4) aus Fig. 1 wurde mit folgenden Parametern durchgeführt:
Membranselektivität: 20; Kompressordruck: 10 bar (a); Rohgasdruck, permeatseitiger Druck: 1 bar (a)

Ziel war erneut ein Methangehalt im Offgas von maximal 1 % (v/v), was in diesem Fall einer Methanausbeute von knapp unter 99,4 % entspricht.

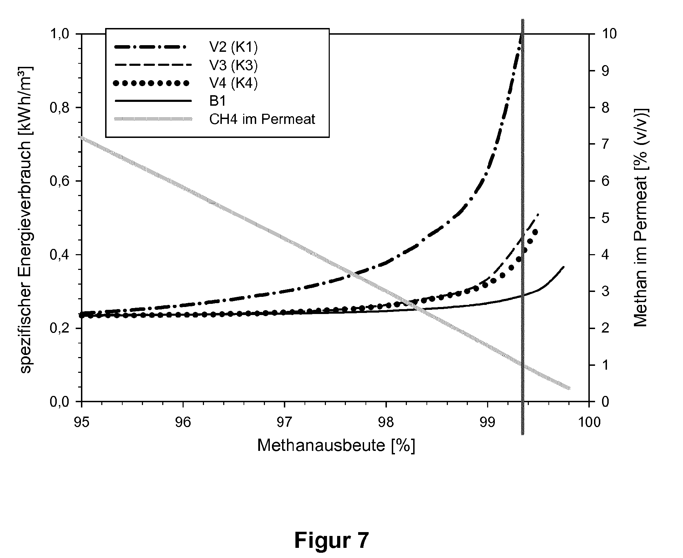

In Fig. 7 sind die computerberechneten Ergebnisse auf dieselbe Weise wie in Fig. 4 grafisch dargestellt. Beginnend mit einem für alle vier Permeatorsysteme praktisch gleichen Energieverbrauch von ca. 0,24 kWh/m³ für eine Methanausbeute von 95 % steigt die erforderliche Energie für das System K1 in Vergleichsbeispiel 2 erneut rasch an und erreicht bei der gewünschten Ausbeute einen Wert von etwa 1 kWh/m³.

Das System K3 besteht zwar ebenfalls nur aus zwei Trennstufen, allerdings wird hier nicht das Retentat der ersten Stufe a1, sondern deren Permeat in der zweiten Stufe b1 gereinigt, wofür ein zweiter Kompressor erforderlich ist. Das Retentat der zweiten Stufe b1 wird in den Feed von a1 zurückgeleitet und durchläuft das System somit erneut. Methan wird in diesem Fall nur als Retentat von a1 gewonnen.

K4 stellt ein dreistufiges System dar, in dem eine erste Trennstufe a1 zur Gewinnung des Methans im Retentat dient, während das Permeat von a1 in einem zweistufigen System gereinigt wird. K4 ist sozusagen ein System K1, dem eine Trennstufe vorgeschaltet ist. Methan wird hier im Retentat der ersten und der dritten Trennstufe gewonnen. Natürlich ist auch in diesem Fall ein zweiter Kompressor erforderlich.

Aus Fig. 7 ist zu erkennen, dass kaum Unterschiede zwischen K3 und K4 bestehen, d.h. die Vergleichsbeispiele 3 und 4 zeigen gegenüber Vergleichsbeispiel 2 eine erheblich bessere Trennleistung bei etwa gleichem Energieverbrauch, der bis ca. 97 % Methanausbeute nahezu gleich bleibt und sich bei den gewünschtenen knapp 99,4 % gegenüber den Ausgangswerten nicht wie in V2 verfünffacht, sondern nur etwa verdoppelt. Überraschend ist vor allem, dass der Unterschied zwischen V3 und V4 nur rund 10 % beträgt, obwohl System K4 eine zusätzliche, dritte Trennstufe umfasst.

Das erfindungsgemäße Permeatorsystem von Beispiel 1 zeigt beginnend bei etwa 97,5 % Methanausbeute einen erkennbar geringeren Energieverbrauch als die Vergleichsbeispiele 3 und 4 und ab etwa 98-98,5 % einen deutlich geringeren. Beim Zielpunkt hat der Energiebedarf gegenüber dem Ausgangswert lediglich um etwa ein Sechstel von 0,24 auf etwa 0,28 kWh/m³ zugenommen. Die Permeatorsysteme der beiden Vergleichsbeispiele 3 und 4 liegen hier um etwa ein Drittel höher, nämlich bei etwa 0,44 bzw. knapp 0,40 kWh/m³, was bedeutet, dass in Beispiel 1 gegenüber V2 und V3 zumindest 30 % der Energie eingespart werden können.

Dieses Resultat ist angesichts des geringen Unterschieds zwischen V3 und V4 überraschend, da nicht zu erwarten war, dass durch das Vorsehen einer vierten Trennstufe eine viel stärkere Verbesserung erzielbar ist als beim Übergang von zwei zu drei Trennstufen.

Fig. 8 zeigt den Fall, dass bei gleichbleibenden Modellierungsdaten dieser ersten Beispielsgruppe das Ziel von 1 % (v/v) Methan im Permeat zu 99 % Methanausbeute verändert wird. Dabei verschiebt sich gegenüber Fig. 7 die senkrechte "Ziellinie" um den entsprechenden Betrag nach links. Wie anhand der Lage des Schnittpunkts mit der Diagonalen zu erkennen ist, entspricht diese Vorgabe einem Restgehalt von etwa 1,4 % (v/v) Methan im Permeat. Die Unterschiede zu den drei Systemen nach dem Stand der Technik (wie auch jener zwischen den Systemen K3 und K4) fallen hier zwar etwas geringer aus, sind aber immer noch erheblich: Auch bei diesen "reduzierten" Ausbeute- und Reinheitsanforderungen können gegenüber V3 und V4 ca. 20 % der Energie eingespart werden.

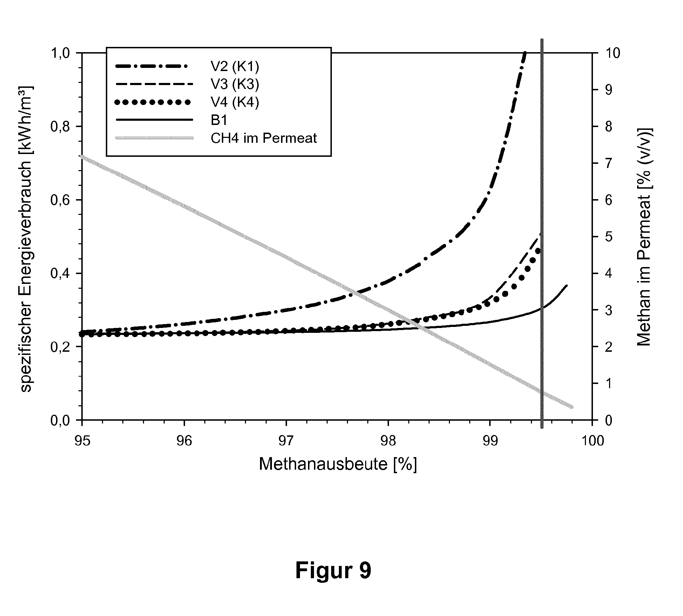

Fig. 9 zeigt den umgekehrten Fall zu Fig. 8, nämlich gegenüber Fig. 7 leicht "verschärfte" Zielvorgaben, d.h. eine Methanausbeute von 99,5 %, was einem Methangehalt im Permeat von nur knapp 0,8 % (v/v) entspricht. Dieses Ziel ist mit System K1 in V2 nicht bzw. nur mit einem exorbitanten Energieverbrauch unter Rezyklierung des größten Teils des Gasfeeds zu erreichen. Die Systeme K3 und K4 der Vergleichsbeispiele 3 und 4 erreichen die Vorgabe zwar, benötigen hierfür aber Energien von etwa 0,55 bzw. 0,50 kWh/m³ Gas, während das erfindungsgemäße System aus Fig. 5 mit knapp 0,3 kWh/m³ auskommt. Dies stellt eine Energieersparnis von 45 % bzw. 40 % gegenüber dem Stand der Technik dar.

### Beispiel 2 & Vergleichsbeispiele 5 bis 7

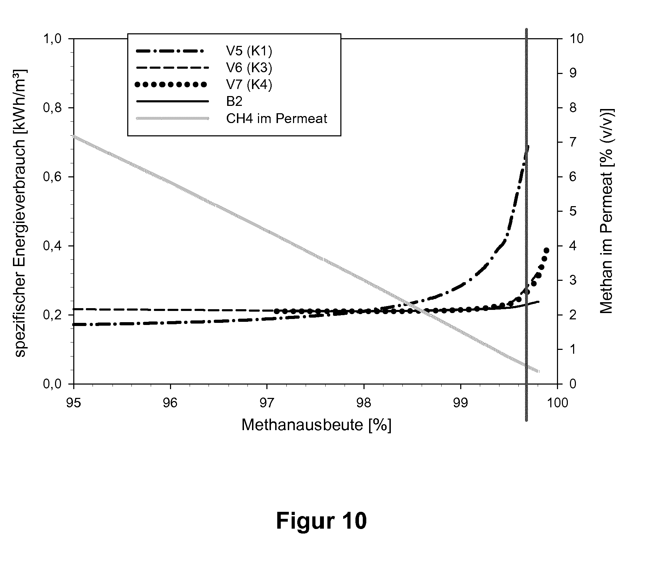

Analog zu Beispiel 1 wurde eine Trennung unter Verwendung der Permeatorsysteme K1, K3 und K4 nach dem Stand der Technik als V5, V6 und V7 sowie des erfindungsgemäßen Systems aus Fig. 5 (B2) computermodelliert, wobei allerdings Membranen mit einer Selektivität von 50 anstelle von 20 eingesetzt wurden und die Zielkonzentration von Methan im Offgas bei 0,5 % (v/v) angesetzt wurde. Die Ergebnisse sind in Fig. 10 grafisch dargestellt.

In dieser Beispielsgruppe startet das System von V5, d.h. Permeatorsystem K1, auf der y-Achse (bei 95 % Methanausbeute) mit einem etwas geringeren Energieverbrauch als die anderen drei Systeme. Bei etwa 98 % liegen alle vier Systeme gleichauf, darüber steigt der Energiebedarf von V5 allerdings erneut stark an und beträgt beim Zielpunkt etwa das 3,5fache des Ausgangswerts.

Beispiel 2 und die Vergleichsbeispiele 6 und 7 liegen vom Startpunkt weg bis etwa 99,2 % Methanausbeute gleichauf, darüber treten aber erneut merkliche Vorteile für das Permeatorsystem der Erfindung zutage, was am Endpunkt eine Energieersparnis von rund 15-20 % gegenüber V6 und V7 ergibt. Zwischen diesen beiden Permeatorsystemen nach dem Stand der Technik, also den Systemen K3 und K4, existieren erneut kaum Unterschiede, hier sogar nur ca. 5 % Differenz im Energieverbrauch.

Erhöht man die Zielvorgaben analog zu Beispiel 1, d.h. verschiebt man die senkrechte "Ziellinie" zu höheren Methan-Ausbeuten und -Restgehalten hin nach rechts, treten die Vorteile der Erfindung erneut noch viel deutlicher zutage.

### Beispiel 3 & Vergleichsbeispiele 8 bis 10

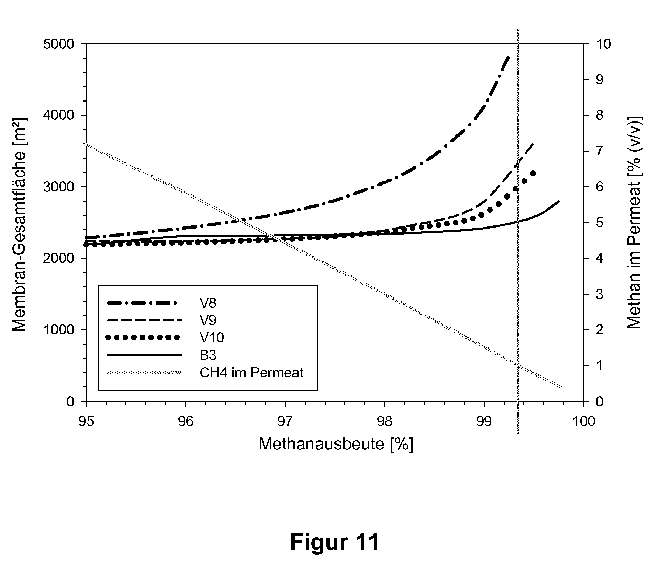

Die Modellierung aus Beispiel 1 mit Membranen der Selektivität 20 und einer Zielkonzentration von maximal 1 % (v/v) Methan im Offgas, was wiederum knapp 99,4 % Methanausbeute entspricht, wurde wiederholt, wobei in diesem Fall nicht der Energieverbrauch, sondern die Membranfläche die Messgröße von Interesse war. Die Ergebnisse sind in Fig. 11 grafisch dargestellt.

Der Kurvenverlauf ähnelt logischerweise jenem in Fig. 7 und zeigt erneut die Unzulänglichkeit von System K1 in V8 für die gesetzten Ziele. Allerdings tritt in dieser Beispielsgruppe der Unterschied zwischen den Permeatorsystemen K3 und K4 in V9 und V10 ein wenig deutlicher zutage als zuvor beim Energieverbrauch. Dennoch ist die durch die Vorrichtung und Verfahrensführung gemäß vorliegender Erfindung in Beispiel 3 erzielbare Verbesserung gegenüber K3 und K4 weiterhin deutlich zu erkennen. So erfordert im vorliegenden Beispiel 3 ein Permeatorsystem der vorliegenden Erfindung wie in Fig. 4 dargestellt um rund 500 bzw. 700 m² kleinere Membranflächen als die Vergleichsbeispiele 9 und 10, was erneut eine Ersparnis von etwa 15-20 % gegenüber den Systemen K3 und K4 darstellt.

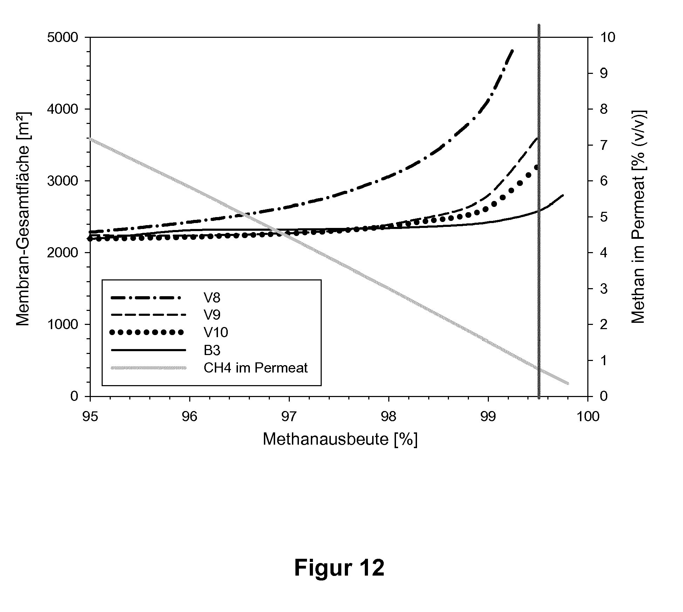

In Fig. 12 ist schließlich jener Fall dargestellt, bei dem für die Systeme von Beispiel 3 und die Vergleichsbeispiele 8 bis 10 die Zielvorgabe auf 99,5 % Methanausbeute, d.h. einem Methan-Restgehalt im Offgas von ca. 0,7 % (v/v) eingestellt wurde. Die für das erfindungsgemäßen System von Beispiel 3 benötigte Membranfläche ändert sich dabei kaum, nämlich nur von ca. 2550 zu ca. 2600 m², die Ersparnis gegenüber K4 steigt dabei jedoch von rund 500 auf etwa 700 m² und gegenüber K3 sogar von rund 700 auf knapp 1100 m². Die beiden Systeme der Vergleichsbeispiele 9 und 10 erfordern somit für die gleiche Trennleistung wie das erfindungsgemäße System aus Fig. 5 um 42 % bzw. 27 % größere Membranflächen.

### Beispiel 4

Die Ergebnisse mehrerer Vergleiche der beiden Ausführungsformen des erfindungsgemäßen Permeatorsystems gemäß Fig. 5 und Fig. 6 zeigten, dass diese Systeme bei analog zu oben durchgeführten Simulationen kaum unterschiedliche Simulationsdaten produzierten. Die Unterschiede waren tatsächlich so gering, dass sie in ähnlichen Diagrammen wie oben beschrieben nicht grafisch darstellbar sind. Offenbar bewirkt der durch die vierte Trennstufe eingeführte zusätzliche Freiheitsgrad und die daraus resultierende erhöhte Trennleistung, dass es keine signifikante Rolle spielt, ob das Permeat der vierten Trennstufe b2 nur das zweite oder auch das erste Paar Trennstufen erneut passiert.

Zusammenfassend stellt die vorliegende Erfindung somit ein Permeatorsystem und ein damit durchzuführendes Verfahren zur Trennung von im Wesentlichen drucklosen Gasgemischen bereit, die gegenüber dem Stand der Technik einen viel geringeren Energieverbrauch bewirken und deutlich kleinere Membranflächen bzw. -selektivitäten erfordern.

### LITERATURVERWEISE

[1] W. J. Schell, C. D. Houston, "Use of Membranes for Biogas Treatment", Energy Progress 3, 96-100 (1983).
[2] R. Rautenbach, W. Dahm, "Oxygen and methane enrichment - a comparison of module arrangements in gas permeation", Chemical Engineering & Technology 10(1), 256-261 (1987).
[3] R. Rautenbach, K. Welsch, "Treatment of landfill gas by gas permeation - pilot plant results and comparison to alternatives", Desalination 90(1-3), 193-207 (1993), ISSN 0011-9164.
[4] S. A. Stern, B. Krishnakumar, S. G. Charati, W. S. Amato, A. A. Friedman, D. J. Fuess, "Performance of a bench-scale membrane pilot plant for the upgrading of biogas in a wastewater treatment plant", Journal of Membrane Science 151(1), 63-74 (1998), ISSN 0376-7388.
[5] M. Miltner, A. Makaruk, H. Bala, M. Harasek, "Biogas Upgrading for Transportation Purposes - Operational Experiences with Austria's first Bio-CNG Fuelling Station", Chemical Engineering Transactions 18, 617-622 (2009).
[6] B. D. Bhide, S. A. Stern, "Membrane processes for the removal of acid gases from natural gas. II. Effects of operating conditions, economic parameters, and membrane properties", Journal of Membrane Science 81 (3), 239-252 (1993), ISSN 0376-7388.
[7] R. W. Spillman, "Economics of gas separation membranes", Chemical Engineering Progress 85, 41-62 (1989).
[8] R. Qi, M. A. Henson, "Optimization-based design of spiralwound membrane systems for CO2/CH4 separations", Separation and Purification Technology 13(3), 209-225 (1998), ISSN 1383-5866.
[9] A. K. Datta, P. K. Sen, "Optimization of membrane unit for removing carbon dioxide from natural gas", Journal of Membrane Science 283(1-2), 291-300 (2006), ISSN 0376-7388.
[10] J. Xu, R. Agrawal, "Gas separation membrane cascades. I. One-compressor cascades with minimal exergy losses due to mixing", Journal of Membrane Science 112, 115-128 (1996), ISSN 0376-7388.
[11] R. Agrawal, J. Xu, "Gas separation membrane cascades. II. Two-compressor cascades", Journal of Membrane Science 112(2), 129-146 (1996), ISSN 0376-7388.
[12] B. D. Bhide, S. A. Stern, "Membrane processes for the removal of acid gases from natural gas. I. Process configurations and optimization of operating conditions", Journal of Membrane Science 81(3), 209-237 (1993), ISSN 0376-7388.
[13] A. Makaruk, M. Miltner, M. Harasek, "Membrane biogas upgrading processes for the production of natural gas substitute", Separation and Purification Technology 74(1), 83-92 (2010), ISSN 1383-5866.

## Patentansprüche

1. Vorrichtung zur Trennung von im Wesentlichen drucklosen Gasgemischen unter Verwendung von Membran-Gaspermeation, umfassend zumindest zwei Trennstufen, die parallel oder in Serie geschaltet sein können, einen Kompressor zur Beaufschlagung des in einer Feedleitung zugeführten Gasgemischs mit Druck, gegebenenfalls einen zweiten Kompressor zur Beaufschlagung eines Permeats aus einer Trennstufe mit Druck, sowie zumindest eine Rückführungsleitung für zumindest ein Retentat und/oder Permeat einer Trennstufe,
**gekennzeichnet durch**
- zwei Paare von Trennstufen (a1, a2; b1, b2), die über je eine Leitung (Rₐ₁; R_{b1}) zur Weiterleitung des Retentats aus der jeweils ersten Trennstufe (a1; b1) eines Paares in die zweite (a2; b2) in Serie geschaltet sind;
- zwei Kompressoren (c1, c2) zur Beaufschlagung des Feeds der jeweils ersten Trennstufe (a1; b1) eines Paares mit Druck;
- eine Leitung (Pₐ₁) zur Weiterleitung des Permeats der ersten Trennstufe (a1) eines ersten Paares (a1, a2) zu dem das zweite Trennstufenpaar (b1, b2) mit Druck beaufschlagenden Kompressor (c2);
- je eine Leitung (Rₐ₂; R_{b2}) zum Abziehen des Retentats der jeweils zweiten Trennstufe (a2; b2) der Paare;
- je eine Leitung (Pₐ₂; P_{b2}) zur Rezyklierung des Permeats der jeweils zweiten Trennstufe (a2; b2) der Paare; und
- eine Leitung (P_{b1}) zum Abziehen des Permeats der ersten Trennstufe (b1) des zweiten Trennstufenpaares (b1, b2).

2. Vorrichtung nach Anspruch 1, **dadurch gekennzeichnet, dass** die Leitung (Pₐ₂) zur Rezyklierung des Permeats der zweiten Trennstufe (a2) des ersten Paares zu dem das erste Paar (a1, a2) mit Druck beaufschlagenden Kompressor (c1) zurückführt.

3. Vorrichtung nach Anspruch 2, **dadurch gekennzeichnet, dass** die Leitung (Pₐ₂) zur Rezyklierung des Permeats der zweiten Trennstufe (a2) des ersten Paares vor dem das erste Paar (a1, a2) mit Druck beaufschlagenden Kompressor (c1) in die Feedleitung des zu trennenden Gasgemischs einmündet.

4. Vorrichtung nach einem der Ansprüche 1 bis 3, **dadurch gekennzeichnet, dass** die Leitung (P_{b2}) zur Rezyklierung des Permeats der zweiten Trennstufe (b2) des zweiten Paares zu dem das zweite Paar (b1, b2) mit Druck beaufschlagenden Kompressor (c2) und/oder zu dem das erste Paar (a1, a2) mit Druck beaufschlagenden Kompressor (c1) zurückführt.

5. Verfahren zur Trennung von im Wesentlichen drucklosen Gasgemischen mittels Membran-Gaspermeation unter Verwendung einer Vorrichtung nach einem der Ansprüche 1 bis 4, Folgendes umfassend:
- das Leiten des Gasgemischs durch zwei Paare von Trennstufen (a1, a2; b1, b2), wovon jeweils die erste Trennstufe (a1; b1) durch je einen Kompressor (c1; c2) mit Druck beaufschlagt wird und die Retentate dieser ersten Trennstufen (a1; b1) in die jeweils zweite Trennstufe (a2; b2) weitergeleitet werden; wobei das Permeat der ersten Trennstufe (a1) des ersten Paares (a1, a2) in den Feed der ersten Trennstufe (b1) des zweiten Paares (b1, b2) eingeleitet wird oder diesen darstellt;
- das Rezyklieren der Permeate (Pₐ₂, P_{b2}) der jeweiligen zweiten Trennstufen (a2, b2) der Paare;
- das Abziehen der an einer Komponente des Gasgemischs angereicherten Retentate (Rₐ₂, R_{b2}) der jeweiligen zweiten Trennstufen (a2, b2); und
- das Abziehen des an einer anderen Komponente des Gasgemischs angereicherten Permeats (P_{b1}) der ersten Trennstufe (b1) des zweiten Paares (b1, b2).

6. Verfahren nach Anspruch 5, **dadurch gekennzeichnet, dass** das Permeat (Pₐ₂) der zweiten Trennstufe (a2) des ersten Paares (a1, a2) zur ersten Trennstufe (a1) des ersten Paares rezykliert wird.

7. Verfahren nach Anspruch 6, **dadurch gekennzeichnet, dass** das Permeat (Pₐ₂) der zweiten Trennstufe (a2) des ersten Paares (a1, a2) mit dem zu trennenden, im Wesentlichen drucklosen Gasgemisch vermischt wird, wonach das so erhaltene Gemisch mit Druck beaufschlagt wird.

8. Verfahren nach einem der Ansprüche 5 bis 7, **dadurch gekennzeichnet, dass** das Permeat (P_{b2}) der zweiten Trennstufe (b2) des zweiten Paares (b1, b2) zur ersten Trennstufe (b1) des zweiten Paares (b1, b2) rezykliert wird und/oder zur ersten Trennstufe (a1) des ersten Paares (a1, a2) rezykliert wird.

9. Vorrichtung nach einem der Ansprüche 1 bis 4 oder Verfahren nach einem der Ansprüche 5 bis 8, **dadurch gekennzeichnet, dass** die Membranen der einzelnen Trennstufen aus Polymerfilm- und Keramikmembranen ausgewählt sind.
